Europäisches Patentamt

European Patent Office

Office européen des brevets

(11) Publication number: **0 407 633 A1**

# EUROPEAN PATENT APPLICATION

(21) Application number: 89112637.7

(22) Date of filing: **11.07.89**

(51) Int. Cl.5: **H02J 7/14**, H05B 3/26

(43) Date of publication of application:
**16.01.91 Bulletin 91/03**

(84) Designated Contracting States:
**DE GB**

(71) Applicant: **NISSAN MOTOR CO., LTD.**
**No.2, Takara-cho, Kanagawa-ku**
**Yokohama-shi Kanagawa-ken 221(JP)**

(72) Inventor: **Takatsuka, Hiromichi**
**Haitsu 87-A-202 8-26-7,Okusawa**
**Setagaya-ku Tokyo(JP)**
Inventor: **Kosaka, Tetsuzo**
**1262-2, Kasumiwa-cho**
**Isesaki-shi Gunma-ken(JP)**

(74) Representative: **Patentanwälte Grünecker,**
**Kinkeldey, Stockmair & Partnerner**
**Maximilianstrasse 58**
**D-8000 München 22(DE)**

(54) **Heater controlling apparatus for car window.**

(57) In a window heater controlling apparatus used in an automobile, a heater control unit including a microcomputer is employed to detect a heater-ON condition and thereafter to control the heating voltage of the alternator in such a manner that the heating voltage is gradually increased up to the rated heating voltage at the beginning of the heater control operation. This heater control operation is performed by the duty ratio control of the switching transistor.

## FIG.2

EP 0 407 633 A1

## HEATER CONTROLLING APPARATUS FOR CAR WINDOW

Background of the Invention

Field of the Invention

The present invention relates to an apparatus for controlling a heater for heating a window of an automobile so as to eliminate frost, snow, ice, and so on.

Description of the Related Art

The above-described window heater controlling apparatus for an automobile is known from, e.g., Japanese Patent Publication No. 61-33735 (1986).

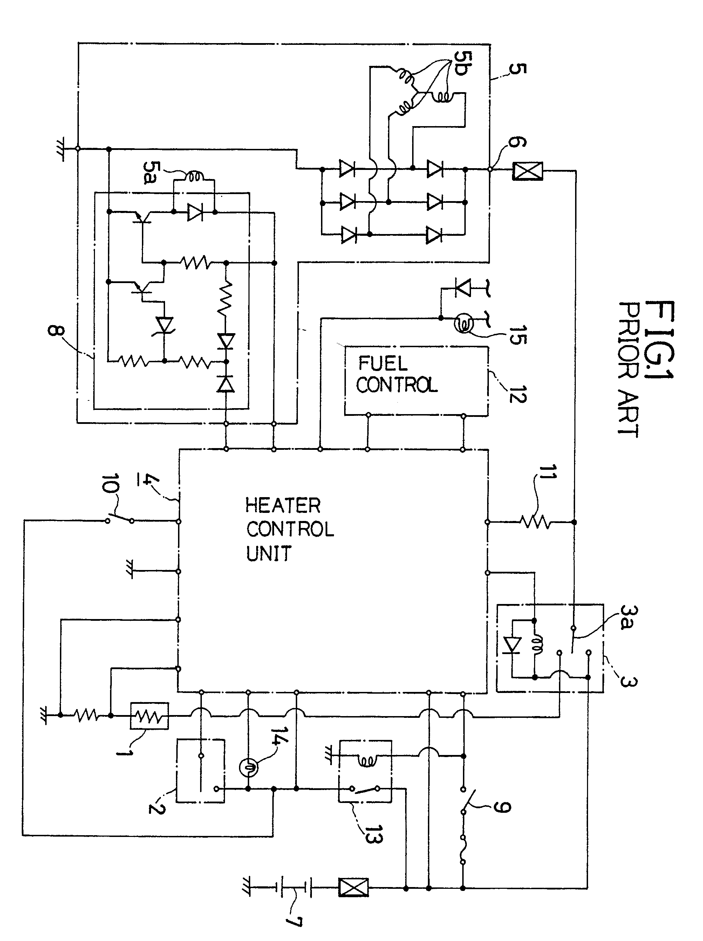

In this conventional window heater controlling apparatus as shown in Fig. 1, a heating resistor element 1 made of a metal powder in the vapor method is mounted on a window glass such as a windshield of an automobile (not shown in detail). While heating the window by this heater element 1, frost, snow and ice or the like are melted away.

More specifically, either when an ice-melting switch 2 is turned off, or after five minutes have passed since this switch 2 is turned on, a contact 3a of a control relay 3 is changed over in response to an energizing signal derived from a heater control unit 4 so that electronic connections are made between an output unit 6 of an alternator 6, a battery 7 having a rated voltage of 12 V, and other electric loads. Based upon the output voltage produced from the output unit 6 of the alternator 5, a voltage regulator 8 controls an energizing current supplied to a rotor coil 5a of the alternator 5 in such a manner that an output voltage applied to a stator coil 5b of the alternator 5 is set up to, for instance, 13.5 V when the battery voltage is lower than 12.5 V. That is, the regulator 8 performs the normal voltage control. It is so designed that the energizing current is furnished from the battery 7 via the control unit 4 and an ignition switch 9 to this voltage regulator 8.

To the contrary, when five minutes have not yet passed since the ice-melting switch 2 is turned on and also unless this switch 2 is turned off, the above-described normal voltage control is interrupted so as to execute the ice melting operation.

In other words, when a detection is made that a gear shift position sensor 10 detects that the gear shift position of the power transmission is at the neutral position (involving the parking position), namely an automobile is stopped, the control unit 4 perform the following control operations after interrupting the generation of the alternator 5. That is, an electronic fuel control unit 12 is under control that the output voltage from the alternator 5 is increased the 60 V in response to a detection voltage across a voltage detecting resistor 11. The electronic fuel control unit 12 controls a supply amount of a fuel to an engine of the automobile as follows. When the engine revolution is increased, the higher output voltage is produced from the alternator 5, whereby the higher output voltage can be matched with the power consumption of the above-described heater element 1.

The control unit 4 switches the contact 3a of the control relay 3 so as to connect the output unit 5a of the alternator 5 with the electric heater resistor 1. Thereafter, a maximum energizing current is supplied to the rotor coil 5a in order to commence the generation for the ice-melting operation.

Thus, the heater resistor 1 is energized to heat the resistor itself, whereby iced particles such as frost and snow attached to the window glass is melted away.

Reference numeral 13 indicates an ignition relay for supplying a power supply voltage to the control unit 4; reference numeral 14 indicates an indication lamp for ice-melting operation; and, reference numeral 15 is a charge lamp for indicating whether or not the alternator 5 generates the AC power.

In the above-described conventional heater controlling apparatus, after the control relay 3 is changed when the ice-melting operation is commenced, the power generation by the alternator is again performed by supplying the maximum energizing current to the rotor coil 5a of the alternator 5 in such a manner that the output voltage appearing the stator coil 5b becomes 60 V. As a result, the following problems may be caused.

Since the load current of the electric resistor 1 flows through the alternator 5 at the substantially same time as the power generation by the alternator 5 starts, a reaction torque is exerted in the alternator 5, by which the rotation of alternator 5 is stopped. In particular, the great reaction torque caused by the heavy electric load such as the electric resistor 1, is simultaneously produced When the heavy load current flows through the alternator 5. As a result, since the engine speed is lowered, or the engine power is considerably lowered, the idling operation is brought into an unstable condition which causes higher vibrations, or shocks due to changes in the driving torque. As a consequence, a comfortable driving cannot be achieved.

## Summary of the Invention

The present invention has been made in an attempt to solve the conventional problems, and therefore has an object to provide a heater controlling apparatus for a window of an automobile, capable of suppressing the reaction torque which is exerted when the energizing operation to the heating element is commenced.

A window heater contolling apparatus, according to the invention, comprises:
a generator (C) for generating a heating voltage to be applied to the window heater (B);
a detector (D) for detecting a heater-ON condition; and,
a controller (E) for controlling the generator (C) so as to gradually increase the heating voltage up to a predetermined heating voltage with respect to a lapse of time upon detection of the heater-ON condition.

## Brief Description of the Drawings

Fig. 1 is a circuit diagram of the conventional window heater controlling apparatus;

Fig. 2 is a schematic block diagram for explaining a basic idea of a window heater controlling apparatus according to the present invention;

Fig. 3 is a circuit diagram of a window heater controlling apparatus according to a first preferred embodiment of the invention;

Fig. 4 is a flowchart for explaining a window heater controlling operation of the window heater controlling apparatus shown in Fig. 3;

Fig. 5 and 6 are graphic representations for explaining a relationship between the reaction torque and the revolution number of the alternator;

Fig. 7 is a circuit diagram of a window heater controlling apparatus according to a second preferred embodiment of the invention; and,

Fig. 8 represents waveforms for explaining transition periods of the heater controlling operation according to the sound preferred embodiment.

## Detailed Description of the Preferred Embodiment

### BASIC IDEA

Before proceeding with various embodiments, a basic idea of the window heater controlling apparatus according to the invention will now be summarized with reference to Fig. 1.

As shown in a block diagram of Fig. 1, the window heater controlling apparatus according to the basic idea of the present invention includes a heating element "B" mounted on a window, e.g., a windshield "A"; an alternator "C"; a heating voltage controlling means "E"; and a heater-ON condition detecting means "D". The heating element "B" is heated by receiving the heating voltage generated in the alternator "C" through the heating voltage controlling means "E". When the heater-ON condition is detected by the heater-ON condition detecting means "D"; the heating voltage is gradually increased to a predetermined voltage, i.e., a rated heater voltage in the heating voltage controlling means "E" with respect to a lapse of time. As a result, the reaction torque occurring at the beginning of the heater-ON operation can be suppressed.

## FIRST WINDOW HEATER CONTROLLING APPARATUS

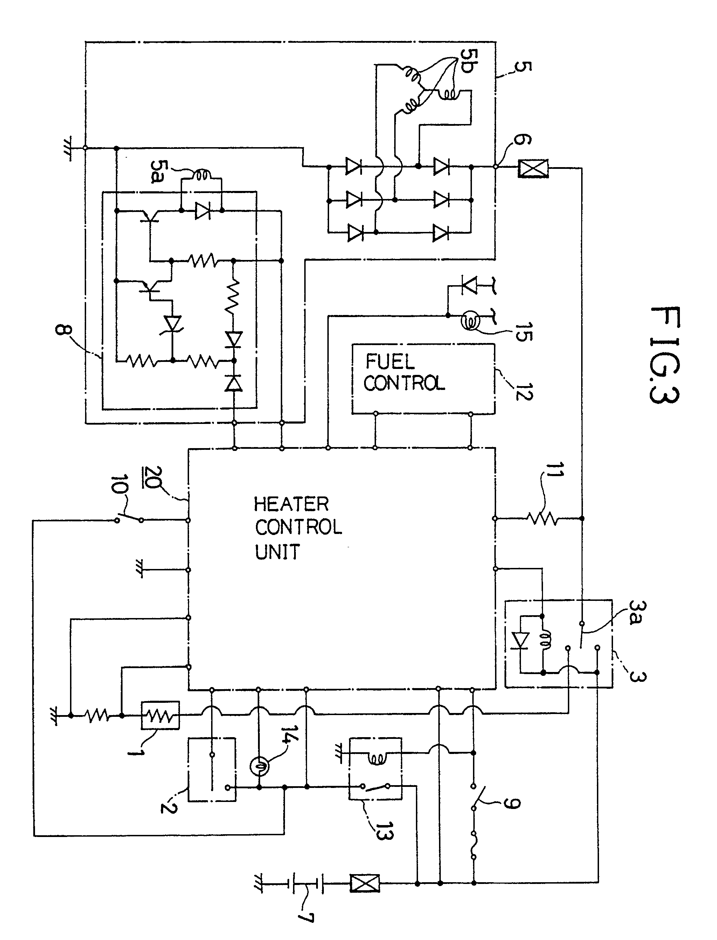

Referring now to Figs. 3 to 6, a window heater controlling apparatus according to a first preferred embodiment will be described. It should be noted that the same reference numerals shown in Fig. 1 will be employed as those for denoting the same or similar circuit elements shown in the following figures.

In the circuit diagram shown in Fig. 3, a heater control unit 20 including a microcomputer or the like (not shown in detail) receives the ON/OFF signal derived from the ice-melting switch 2; and the gear shift position signal produced from the gear shift position sensor 10.

A major control of this heater control unit 20 contains a switching operation of the contact 3a of the control relay 3, and a supply of the energizing current to the rotor coil 5a of the alternator 5.

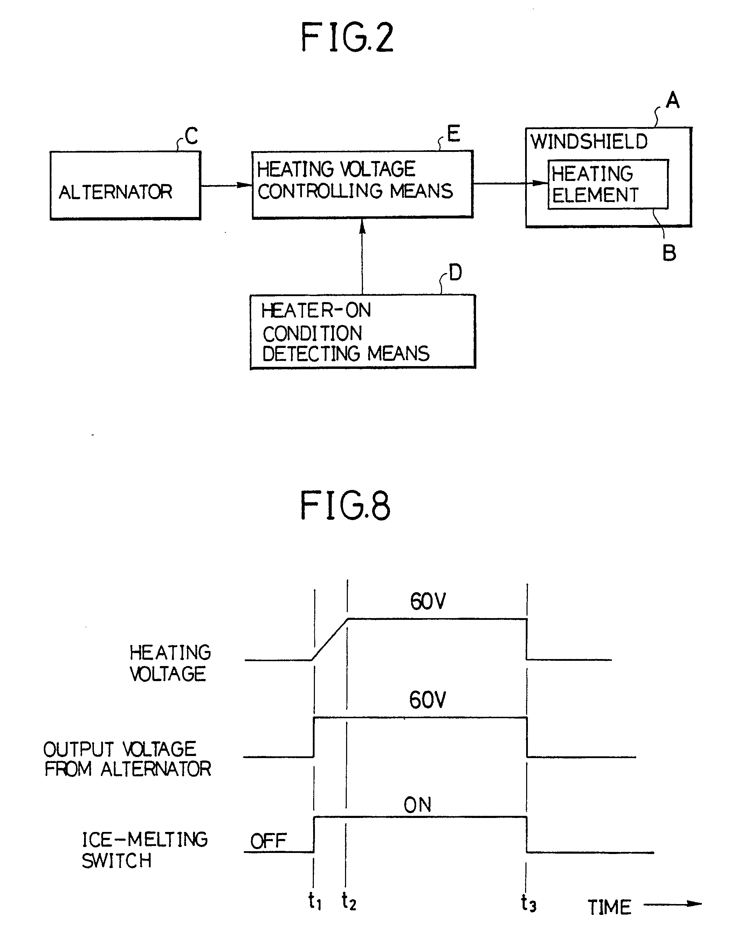

Also, this heater control unit 20 functions as the above-described heating voltage controlling means "E" and heater-ON condition detecting means "D" shown in Fig. 2.

This control unit 20 may be arranged in such a way that, for instance, a duty ratio control (PWM control) of a transistor is performed so as to gradually increase the energizing current to the rotor coil 5a of the alternator 5 under the control of CPU and a timer (not shown in detail).

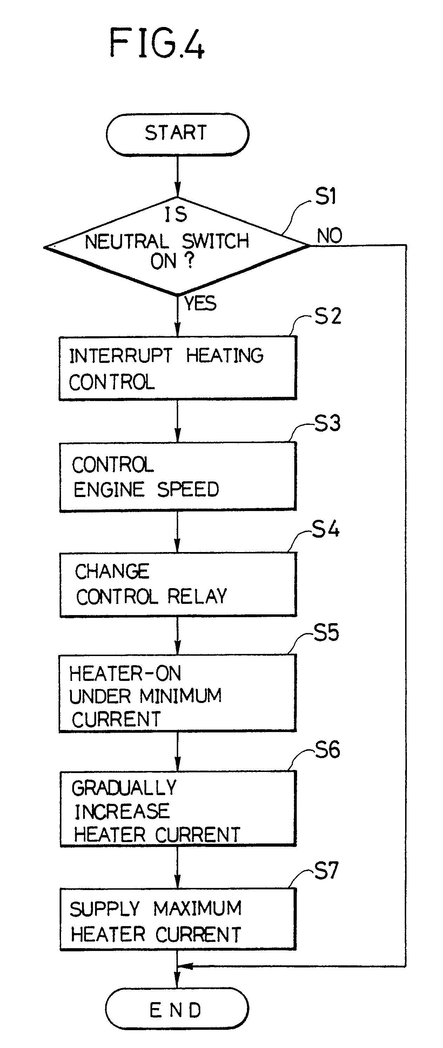

Referring to a flowchart shown in Fig. 4, a heater control by the heater control unit 20 will now be described in detail. The control routine defined in this flowchart is commenced when the ice-melting switch 2 is turned on.

In a first step S1, a judgement is made whether or not the gear shift position of the power transmission detected by the gear shift position sensor 10 indicates the neutral position (including the parking position). If Yes, a judgement is made that the automobile is in the stopping condition. Then, the control process is advanced to the next step S2. If No, then this control routine is completed. When the ice-melting switch 2 is turned on and simultaneously the automobile is in the stopping condition, the heater control unit 20 judges that the present condition corresponds to "the heater-ON condition", whereby the low heating voltage is applied to the heating resistance element 1 (will be discussed later in detail).

At the step S2, the heating voltage control similar to the conventional method is interrupted so as to stop the generating operation by the alternator 5. The control process is advanced to a step S3.

In this step S3, the electronic fuel controller 12 is controlled in the conventional method so as to increase the engine speed. Thereafter, the control process is advanced to a step S4.

In the step S4, the contact 3a of control relay 3 is controlled by the heater control unit 20 in such a manner that the output unit 6 of the alternator 5 is connected to the heating element 1. Subsequently, the control process is advanced to a step S5.

In this step S5, the heater control unit 20 controls the voltage regulator 8 in such a way that a minimum energizing current flows through the rotor coil 5a of the alternator 5.

In the next step S6, this minimum energizing current is gradually increased by adding a predetermined current thereto at a predetermined time interval with respect to a lapse of time. Thus, this minimum energizing current is increased up to a maximum (rated) heater current, e.g., 3A within a predetermined time period, e.g., 3 to 5 seconds. Since the gradually increased energizing current is supplied to the rotor coil 5a, the output voltage of the alternator 5 is gradually increased and finally becomes a maximum (rated) voltage thereof, e.g., 60 V.

After this energizing current becomes the maximum value (e.g,, 3A), this maximum (rated) current is continuously supplied to the rotor coil 5a (step S7). Thus, the normal heating operation of the heater element 1 is achieved.

As previously described, since the small energizing current flows through the rotor coil 5a at the beginning of the heater control operation (heater-ON condition), the reaction torque of the alternator 5 is also small. As a result, because an increase of the reaction torque can be suppressed even if such a small energizing current is supplied to the heater element 1, the reduction of the engine speed or engine power can be prevented. Thus, the stabilities of the idle speed of the engine can be improved, and furthermore the mechanical vibrations occurring in the idling operation or the engine torque can be suppressed so as not to apply the mechanical shocks to a car user, resulting in a comfort driving.

The maximum (rated) energizing current is continuously supplied to the rotor coil 5a of the alternator 5, whereby the normal ice melting operation is performed in the heater element 1.

REACTION TORQUE CHARACTERISTICS

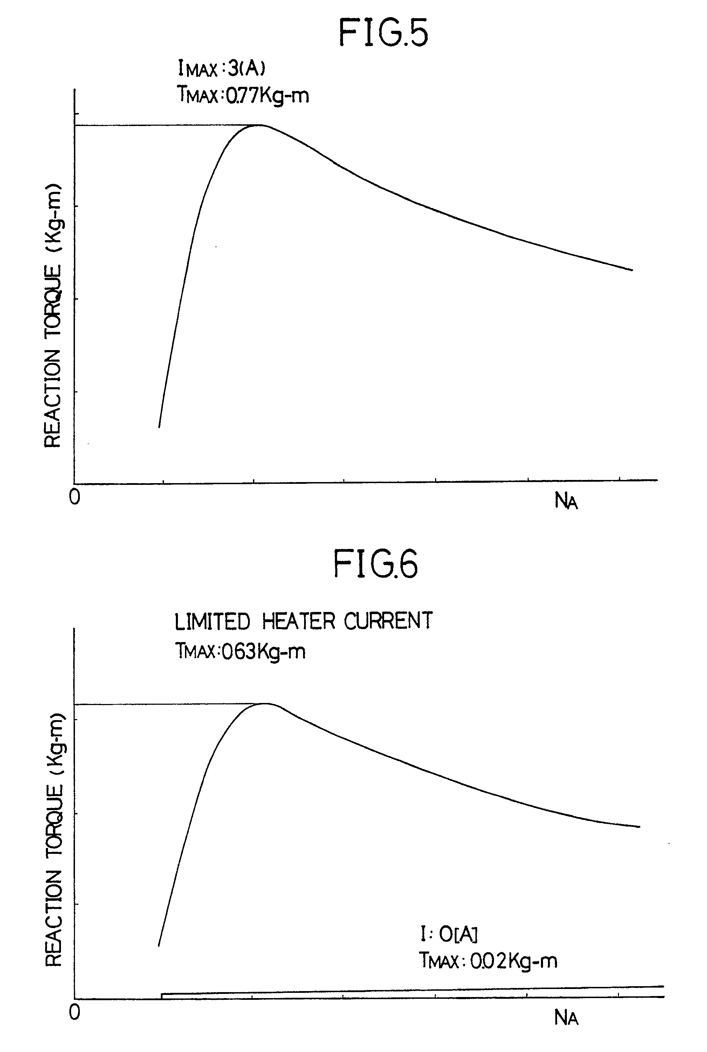

Fig. 5 represents variations in the reaction torque with respect to a lapse of time while the maximum (rated) energizing current, e.g., 3A is supplied to the rotor coil 5a of the alternator 54. As shown in Fig. 5, a maximum reaction torque becomes approximately 0.77 kg-m.

In Fig. 6, there is shown vibrations in the reaction torque with regard to the time lapse while the energizing current for the rotor coil 5a is under control of the heater control unit 20. As shown in Fig. 6, another maximum reaction torque is about 0.63 kg-m.

As is apparent from the foregoings, the reaction torque occurring in the alternator 5 is sufficiently suppressed during the heater control operation, i.e., at the beginning of the heater-ON operation.

SECOND WINDOW HEATER CONTROLLING APPARATUS

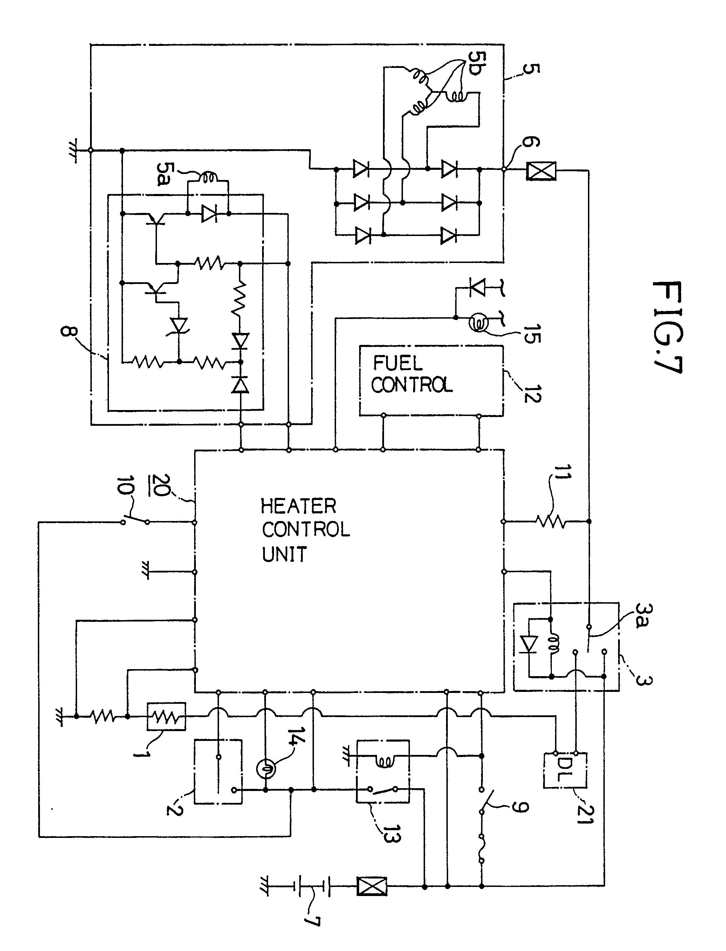

A description will now be made on a window heater controlling apparatus according to a second preferred embodiment with reference to Figs. 7 and 8.

As apparent from the circuit diagram shown in Fig. 7, the feature of this heater controlling apparatus is to newly employ a delay circuit 21 interposed between the heater element 1 and control relay 3.

As represented in a graph of Fig. 8, when the rated supply voltage, e.g., 60 V is applied to this delay circuit 21, the delay circuit 21 controls an output voltage thereof in such a manner that the output voltage is gradually increased from "0" volt at a time instant "t1" to 60 V at the beginning of the heater control operation. After a predetermined time has passed, this output voltage reaches the rated voltage, i.e., 60 V at a time instant "t2". Then, the normal heating operation is continued until the ice-melting switch 9 is turned off (at a time instance "t3").

Accordingly, since the small load current flows through the alternator 5 at the beginning of the heater control operation, the reaction torque produced in the alternator 5 can be similarly suppressed.

It should be noted that since any types of the conventional delay circuit may be utilized as this delay circuit 21, no detailed description is made in the specification.

While has been described above, in the window heater controlling apparatus according to the present invention, the heating voltage applied to the window heating element is first set to a minimum value and gradually increased up to the rated value thereof at the beginning of the heater control operation just after the ice-melting switch is turned on. As a consequence, the reaction torque occurring in the alternator can be sufficiently suppressed at the beginning of the heater control operation, resulting in a stable idling operation.

## Claims

1. An apparatus for controlling a window heater employed in an automobile, comprising:
means for generating a heating voltage to be applied to the window heater;
means for detecting a heater-ON condition; and
means for controlling said generating means so as to gradually increase said heating voltage up to a predetermined heating voltage with respect to a lapse of time upon detection of said heater-ON condition.

2. A window heater controlling apparatus as claimed in claim 1, wherein said heating voltage controlling means and heater-ON condition detecting means are constructed of a microcomputer.

3. A window heater controlling apparatus as claimed in claim 2, wherein said microcomputer includes a central processing unit, a timer, a program memory, and a transistor, whereby said transistor is switched in a duty ratio control mode.

4. A window heater controlling apparatus as claimed in claim 2 further comprising a delay circuit coupled to the window heater and said microcomputer so as to delay supply of said predetermined heating voltage to the window heater upon detection of the heater-ON condition.

5. A window heater controlling apparatus as claimed in claim 1, wherein said heating voltage generating means is an alternator having a rotor coil.

6. A window heater controlling apparatus as claimed in claim 1, wherein said heater-ON condition is determined by turning on a gear shift position switch under which the driving of the automobile is interrupted.

# FIG.1
## PRIOR ART

HEATER CONTROL UNIT

FUEL CONTROL

# FIG.2

# FIG.8

7

FIG.3

# FIG.4

START

S1
IS
NEUTRAL SWITCH
ON ?

NO

YES

S2
INTERRUPT HEATING
CONTROL

S3
CONTROL
ENGINE SPEED

S4
CHANGE
CONTROL RELAY

S5
HEATER-ON
UNDER MINIMUM
CURRENT

S6
GRADUALLY
INCREASE
HEATER CURRENT

S7
SUPPLY MAXIMUM
HEATER CURRENT

END

# FIG.5

IMAX : 3(A)
TMAX : 0.77Kg-m

REACTION TORQUE (Kg-m)

0                                                    NA

# FIG.6

LIMITED HEATER CURRENT
TMAX : 0.63Kg-m

REACTION TORQUE (Kg-m)

I : 0[A]
TMAX : 0.02Kg-m

0                                                    NA

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0256690 (GENERAL MOTOR CORP.) <br> * page 3, line 43 - page 23, line 44; figures 1-18 * <br> --- | 1-6 | H02J7/14 <br> H05B3/26 |
| A | US-A-4673797 (R.A.WEIRICK) <br> * column 2, line 54 - column 9, line 4; figures 1-7 * <br> --- | 1, 5 | |
| A | GB-A-2198261 (SCAN MARTIN BURTON) <br> * page 3, line 14 - page 6, line 29; figure 1 * <br> --- | 1, 4 | |
| A | EP-A-0314454 (FUJI JUKOGYO KABUSHIKI KAISHA) <br> * column 2, line 4 - column 4, line 41; figure 1 * <br> --- | 1 | |
| A | US-A-4539446 (YAMAMOTO) <br> * column 3, line 35 - column 5, line 15; figures 2-4 * <br> ----- | 1 | |

**TECHNICAL FIELDS SEARCHED (Int. Cl.5)**

H02J
H05B
B60S
B60R

The present search report has been drawn up for all claims

| Place of search | Date of completion of the search | Examiner |
|---|---|---|
| THE HAGUE | 09 MARCH 1990 | FOURRICHON P.M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)